# EUROPEAN PATENT APPLICATION

(11) **EP 2 702 911 A1**
(43) Date of publication of application: **05.03.2014**
(21) Application number: 13181739.7
(22) Date of filing: 26.08.2013
(51) Int. Cl.: A47J 37/01, A47J 37/06, A47J 37/10

(54) **Funnel-shaped roasting pan**

(30) Priority: 27.08.2012 DK 201200523
(71) Applicant: Electrolux Appliances Aktiebolag, 105 45 Stockholm (SE)
(72) Inventor: Larsen, Allan W., 3400 Hillerød (DK); Haurum, Jens Peter, 7190 Billund (DK)
(74) Representative: Röder, Richard

(57) **Abstract**

Roasting pan (7), wherein the roasting pan (7) has a shape of a funnel.

## Description

The present invention relates to a roasting pan.

The invention further refers to a roasting pan with a draining device and strainer. The roasting pan is a type that can be used in ordinary household ovens, in industrial ovens, baking ovens and so on. It can also be used for different grilling processes. An example of its application is cooking a roast, when the collected scalding grease and boiling liquids can be easily and conveniently drained without a risk of burnt fingers and then this grease and liquid can be kept to be used later when preparing the accompanying sauce.

During preparation of a roast in a roasting pan, such as roast beef, roast pork, duck or turkey roast, or the like, cooking liquid, such as fat, grease and/or gravy collects in the roasting pan, and is often subsequently used for preparing a sauce to be served with the roast. Accordingly, the cooking liquid which collects in the roasting pan, most likely at the bottom thereof, has to be transferred from the roasting pan to a further container, such as a cooking pot, preferably to prepare the sauce as such, or to a sauce boat, gravy boat or saucier, or the like, to serve the fat, grease and/or gravy as such together with the roast.

Transferring the cooking liquid from the roasting pan to the further container is done, e.g. in standard households, most likely, by tilting the roasting pan and pouring and/or draining the cooking liquid over an edge or rim of the roasting pan, preferably at a corner edge region of the roasting pan.

To carry out the aforementioned task with a traditional roasting pan, the roasting pan must first set aside and the cooking liquid, e.g. scalding grease and/or boiling liquid must be poured from the roasting pan with the risk of burnt fingers and spilling the scalding grease and/or boiling liquid on the floor with the added risk of accidents. In fact it is a complicated process.

Moreover, to carry out the aforementioned task, various spoons and/or ladles must normally be used to collect the grease and boiling liquid.

The document EP 1 459 664 A1 describes a roasting pan having a discharging device which comprises a tubular member in the bottom part and a tap cooperating with the tubular member for adjustment of the discharge, the tap comprising a rotatable plug. However, according to this document a handling tool is used, which is similar to a screwdriver, and which is not linked to the plug. Thus, the handling tool has to be first engaged with or pinned into a groove in the head of the plug in order to open the discharging device. This will be difficult and laborious having a roasting pan filled with hot and most likely turbid, cooking liquid. Moreover, the handling tool is prone to be mislaid and as a consequence the plug cannot be operated. The above document further discloses a roasting pan having a flat and straight bottom. Accordingly, collecting or draining the cooking liquid will not be efficient without tilting, and thus lifting the roasting pan, i.e. the cooking liquid will only drain slowly and incomplete out of the draining device without, or even with tilting and lifting the roasting pan. A still further problem is that the cooking liquid is drained through a channel comprised in the plug having a rather small diameter. Thus, the channel will rapidly clog in the draining process, as cooking liquid usually also comprises solid materials, such as small pieces of meat clumps of meat and/or fat, or the like. Moreover, it will not be easy to clean said plug, especially said channel provided therein.

It is an object of the present invention to provide a roasting pan, which allows cooking liquids which collect in the roasting pan during a roasting cycle, such as fat, grease and/or gravy to assemble more easily and/or to provide a roasting pan from which cooking liquids can be drained/and or poured more easily.

It is a further object of the present invention to provide a roasting pan comprising a drain outlet, wherein the drain outlet can be closed by an operating mechanism and wherein said operating mechanism is linked to the roasting pan, preferably permanently linked during the roasting cycle, wherein more preferably said operating mechanism can be detached for facilitated cleaning thereof.

It is a still further object of the present invention to provide a roasting pan, wherein fast and complete draining of the cooking liquid is facilitated.

It is a still further object of the present invention to provide a roasting pan comprising a drain outlet which will not readily clog if cooking liquids are drained out.

The above objects of the invention are achieved by a roasting pan according to claim 1 and/or 2.

A roasting pan according to claim 1 is funnel shaped.

The roasting pan according to claim 2, which preferably is a roasting pan according to claim 1, is for use in ovens, wherein the roasting pan is characterised by a design that collects scalding grease and boiling liquid so that they can then be drained off.

Such a roasting pan being funnel-shaped, and/or which is characterised by a design that collects scalding grease and boiling liquid so that they can then be drained off, allows cooking liquids to assemble and/or gather at the lowest part of the bottom of the roasting pan. By way of example, the pan, the bottom, or parts thereof comprise an inclination, more preferably having an inclination angle sufficient to let the cooking liquids assemble and/or gather at the lowest part of the bottom, most preferably, by gravitation only. The person skilled in the art will immediately understand how to choose such inclination angle. The inclination angles and the overall design of the roasting pan according to the invention will be chosen such that the roasting pan is still easy to manage and will not tilt by its own, e.g. if put on a kitchen surface. Thus, the overall design, preferably, is flat. Nevertheless, different inclination angles may be chosen for different parts of the roasting pan, and/or different parts of the bottom thereof. For example, the side walls of such roasting pan, as well as bottom parts, e.g. the bottom parts surrounding the lowest part of the bottom, where the cooking liquids will gather, may strongly incline, whereas the major bottom parts may have a more flat incline, i.e. a low inclination angle.

Thus, the roasting pan according to the present invention has not to be tilt or, preferably touched to assemble the cooking liquids, as the cooking liquids will run down the inclining parts of the roasting pan and will gather and/or assemble at the lowest part of the bottom of the roasting pan.

The term "funnel-shaped" as used herein, preferably, means having a part being conical formed. Thereby, the walls of such funnel may be represented by the side walls of such roasting pan and/or bottom parts having a strong incline.

In a preferred embodiment of the roasting pan according to the present invention, the bottom of the roasting pan is funnel-shaped.

Said cooking liquids may comprise each and any liquid being present during preparation of the food, e.g. during a roasting cycle, such as juices produced from frying the roast such as fat, grease and/or gravy, as well as cooking liquids which are added by the cook such as water, wine, or the like. Moreover, such cooking liquids may further comprise solid materials such as small pieces of meat clumps of meat and/or fat, or the like.

In an embodiment of the roasting pan according to the present invention the bottom of the roasting pan further comprise means for facilitating the assembling of the cooking liquids, such as grooves, channels, launders, folds, or the like, which for example guide the cooking liquids to the lowest part of the bottom of the roasting pan.

Preferably the roasting pan according to the present invention is a so called deep roasting pan, i.e. having higher side walls than normal kitchen roasting pans. More preferably, the roasting pan of the invention has side walls having a height equal to or higher than 2 cm, 2.5 cm, 3 cm, 3.5 cm, 4 cm, 4.5 cm, 5 cm, 5.5 cm, 6 cm or 7 cm. This is, as deep roasting pans are advantageous in avoidance and prevention of spilling cooking liquids when, most probably unintentionally, the roasting pan is tilled, bumped, jolted or the like.

According to this invention, the roasting pan, preferably comprising a draining device and, more preferably a sieve, is characterised by the roasting pan being designed in such a way that the shape enables the cooking liquids, such as scalding grease and boiling liquid to gather and/or assemble at the lowest part of the roasting pan, and preferably, pass through the strainer and run down to the drain outlet.

Therefore, the cooking liquids, such as scalding grease and boiling liquid can be simply and conveniently drained off. There are significantly fewer risks of burns and/or waste and the oven is open for a shorter time too. This is also an environmentally-friendly improvement.

Moreover, the draining device can also be used to separate different cooking liquids or ingredients therein such as separation of solid materials comprised in the cooking liquids from liquid parts, or separation of the boiling liquid from the scalding grease.

In an advantageous embodiment of the inventive roasting pan said roasting pan is characterized by a special draining device comprising an operating mechanism and/or comprises a special draining device comprising an operating mechanism, wherein the operating mechanism, preferably is an oblong shaped operating mechanism, more preferably an oblong shaped lever mechanism, and most preferably a cord. In a preferred embodiment where the operating mechanism is a cord, the cord, preferably is a heat resistant cord.

Such special draining device, preferably, is for draining the cooking liquids which gather and/or assemble at the lowest part of the bottom of the inventive roasting pan, out of said pan.

It will be understood by the person skilled in the art that the term "special draining device" as used herein preferably means the draining device as a whole, more preferably, comprising parts thereof, such as fixing and/or operating mechanism and/or means, strainers and/or meshes, handles, sealing elements or the like.

The term "special draining device" as used herein, preferably means a device, such as a deepening, preferably a deepening in a side wall; a recess, preferably a recess in the bottom of the roasting pan; or an outlet, such as a drain outlet; preferably in the bottom of the roasting pan, or the like, or combinations thereof, which facilitates draining cooking liquids, which gather or assemble at the lowest part of the bottom of the inventive roasting pan, out of said pan.

A special draining device, preferably, comprises a closing and/or locking mechanism. Thus, the special draining device is configured such that at least two positions can be adjusted, i.e. a neutral position where the inventive roasting pan prevents the cooking liquids from flowing out of the roasting pan, and an open position, where the cooking liquids are enabled to drain out of the roasting pan and/or where draining out the cooking liquids is facilitated.

In an preferred embodiment the special draining device comprises an operating mechanism, wherein said operating mechanism is linked to the roasting pan, preferably permanently linked to the roasting pan, at least during a roasting cycle, wherein more preferably, said operating mechanism can be detached for facilitated cleaning thereof.

In an embodiment of the inventive roasting pan, an operating mechanism allows to change the position of the special draining device, e.g. from its neutral position to its open position, and vice versa. Thereby, operating such operating mechanism, i.e. changing the position of the special draining device, allows, for example, closing and/or opening, also partially, of an outlet, or the like. Where the special draining mechanism comprises an opening or an outlet, such as a drain outlet, for draining out cooking liquids, operating the operating mechanism and/or change of the position of the special draining device results in opening or closing said outlet and, thus, enabling draining or facilitated draining of the cooking liquids or preventing the cooking liquids form being drained, respectively, out of the roasting pan.

In a further preferred embodiment the operating mechanism is configured such that the means that, as such, closes, seals or locks an outlet, or additional separate means which have to be meshed therewith, has not to be touched by the hands directly, i.e. operating the operating mechanism allows safe closing and opening of the outlet without the need of touching the means that, as such, closes, seals or locks the outlet, or additional separate means which have to be meshed therewith.

In an advantageous embodiment of the inventive roasting pan said roasting pan is characterised by a drain outlet and/or comprises a drain outlet. Preferably, the special draining device comprises a drain outlet.

The term "drain outlet" as used herein preferably means an opening or outlet for draining the cooking liquids, which gather and/or assemble at the lowest part of the bottom of the inventive roasting pan, out of the roasting pan. More preferably, the opening or outlet is an opening or outlet in the bottom of the inventive roasting pan. In other words, in an embodiment of the inventive roasting pan, the roasting pan is equipped with a drain outlet, which is used to drain away the cooking liquids, such as scalding grease and boiling liquid from the roasting pan into some kind of container. Thus, such drain outlet allows a faster and more complete draining of the cooking liquids.

In an advantageous embodiment of the inventive roasting pan, the roasting pan comprises a recess, wherein the recess preferably is for collecting cooking liquids.

According to the present invention the cooking liquids will gather or assemble at the lowest part of the bottom of the inventive roasting pan. It will be understood immediately, that said recess forms part of said bottom of the roasting pan, although the recess can be an extra, preferably detachably or permanently fixed part. If said recess is present, said recess, more preferably, is the lowest part of the bottom of the inventive roasting pan, as the cooking liquids will assemble and/or gather in said recess.

In a particular preferred embodiment the recess will comprise a drain outlet. Said drain outlet is, more preferably, arranged at the bottom of said recess. Thus, the cooking liquids gathering and assembling in the recess will collect above said drain outlet and thus draining is facilitated when the special draining device is in its open position. It will be immediately understood by a person skilled in the art that such recess can be configured in various forms, e.g. having a circular, oval or rectangular shape. It is important to understand that the recess is a deepening where the cooking liquids gather or assemble. In a preferred embodiment the recess is funnel-shaped, i.e. the side walls of the recess exhibit an inclination. The side walls of the recess may also be vertical.

In an advantageous embodiment of the inventive roasting pan, the roasting pan comprises a sealing element, preferably for sealing the drain outlet.

Preferably, the special draining device comprises said sealing element. Such sealing element is for sealing an outlet, opening or the like and may be a selected from the group comprising a sealing bonnet, nipple, lip, joint or packaging rubber, collar, ring, or the like. Said sealing element, preferably, tightly closes an opening or outlet, when the special draining device is in its neutral position. Thus, said sealing element improves the tightness of the closing of the opening or outlet in the neutral position of the special draining device, i.e. it improves preventing the draining of cooking liquids in the neutral position.

In an advantageous embodiment of the inventive roasting pan, the roasting pan comprises a spring element.

Preferably, the special draining device comprises a spring element.

Said spring element, preferably, is selected from the group comprising flat spiral spring, leaf spring, laminated spring, coil, helical or spiral spring, disc spring, conical or conical helical spring, torsion spring, elastomer spring, rubber spring, wire and evolut or buffer spring.

Preferably, said spring element is arranged such that it supports the maintaining of a position or several positions of the special draining device against unwanted change of the position. For this purpose, the spring element is configured such that it exhibits a spring force which holds the operating mechanism in place.

In a further preferred embodiment the operating mechanism and, more preferably, the special draining device are linked to the inventive roasting pan, more preferably detachably linked. Thereby, the special draining device is operated without the need of further additional parts, e.g. screw drivers, or the like.

In a particularly preferred embodiment the operating mechanism is an oblong shaped operating mechanism, more preferably an oblong shaped lever mechanism, most preferably a heat resistant cord. Said oblong shaped operating mechanism, preferably, has two ends. One end is tightly or loosely linked to the roasting pan such that pressing or pulling of the other end of the oblong shaped operating mechanism allows lifting or lowering the operating mechanism, especially of an elongated middle part thereof. Said lifting or lowering of the operating mechanism away from or down towards the bottom of the inventive roasting pan and towards an opening comprised in the bottom, preferably a drain outlet conveys closing or opening of the drain outlet, i.e. the change of the neutral or open position of the special draining device is mediated by lifting or lowering the operating mechanism.

The spring element, preferably being at least one wire, more preferably being prestressed, presses said oblong shaped lever mechanism down towards the bottom of the inventive roasting pan and towards an opening comprised in the bottom, preferably a drain outlet. The force exhibited by the spring element presses the operating mechanism down, preferably on the drain outlet, thus closes the drain outlet, and, thereby, holds the special draining device in the neutral, i.e. closed, position of the special draining device.

In a preferred embodiment of the inventive roasting pan, a heat resistant cord is placed at the bottom of the recess in the roasting pan that prevents the cooking liquids, such as scalding grease and/or boiling liquid from flowing out of the pan when the special draining device is in a neutral position.

In an advantageous embodiment of the inventive roasting pan, the roasting pan is characterised by an attached handle, wherein the handle preferably is to enable easy draining.

Preferably, the special draining device comprises a handle, more preferably, the handle is attached to and/or part of the operating mechanism.

In a particularly preferred embodiment of the present invention the handle is attached to and/or part of the oblong shaped operating mechanism, e.g. a heat resistant cord. The handle, more preferably, is attached to the second end of the oblong shaped operating mechanism.

The handle allows operating mechanism by operating the handle. For example, the handle attached to the operating mechanism is pressed down or lifted up and thus the operating mechanism is moved up or down, respectively. Accordingly, if the operating mechanism is moved up or down the position of the special draining device is changed, e.g. from neutral to open position or vice versa.

In an embodiment where a spring element is arranged such that it supports the maintaining of a position or several positions of the special draining device against unwanted change of the position, for example, operating the handle against the force exhibited by the spring element, the operating mechanism is moved and the spring force is no longer holding the operating mechanism in place. Thus, the position of the special draining device is changed. By way of example, the special draining device is moved to an open position, allowing draining of the cooking liquids, if a handle is pulled upwards, which is attached to a heat resistant cord which is sealing a draining outlet. Pulling the handle and thus the operating mechanism upwards thus mediates the opening of the drain outlet and moves the special draining to an open position.

In preferred embodiment, where the roasting pan is equipped with a handle that can be raised and lowered, the handle is designed so that it can also be used as a closing mechanism together with the operating mechanism, preferably a heat resistant cord.

In a preferred embodiment the handle is supported at one end of the roasting pan so that it can be tilted up and down.

In an advantageous embodiment of the inventive roasting pan, the special draining device is attached to the roasting pan, preferably permanently linked to the roasting pan during a roasting cycle, and wherein, more preferably, said special draining device is detachably linked for facilitating cleaning.

The special draining device and/or parts thereof, preferably the operating mechanism and/or handle, if present, are attached and/or linked to the inventive roasting pan such that no further additional part is needed to operate the inventive roasting pan. Nevertheless, in a preferred embodiment the special draining device and/or parts thereof are detachably linked to the roasting pan, thus facilitating disassembly and easy cleaning.

In an advantageous embodiment of the inventive roasting pan, the handle is arranged at an upper edge region of the roasting pan.

This is that the handle is accessible for the cook and can be operated without the risk of spilling hot cooking liquids and/or burning. Thus, the user can operate the handle such that a change of the position of the special draining device, for example opening an outlet at the bottom of the roasting pan, without the need of moving the roasting pan or touching roast, cooking liquids or the like being content of the roasting pan.

In a preferred embodiment the handle is arranged at an upper edge region of the roasting pan such that the use and handling of the inventive roasting pan, particularly in the functioning of the edge and rim, e.g. inserting or sliding in the roasting pan into a grid or guiding rail of an oven, is not affected.

In a preferred embodiment the handle is arranged at an upper edge region of the roasting pan such that the handle does not protrude or stick out over the dimensions of the roasting pan, preferably the edge and/or rim of the roasting pan.

In an advantageous embodiment of the inventive roasting pan, the roasting pan comprises a sieve, wherein the sieve preferably is placed above the drain outlet.

In a preferred embodiment the sieve is an unattached sieve, i.e. detachably mounted. This allows easy cleaning of the sieve. Said sieve, preferably, comprises a mesh for sieving unwanted material. For example, solid materials contained in the cooking liquids will be sieved by passing through the mesh and thus the cooking liquid is freed from solid materials.

Thus, the sieve prevents clogging of the outlet, such as a drain outlet positioned below or behind the sieve if cooking liquids are drained out.

It will be understood that the sieve can be configured in various ways and/or be made of various materials. Preferably, the sieve comprises a mesh or a strainer, wherein, more preferably, the mesh or the strainer is made out of a material selected from the group comprising heat resistant plastic or heat resistant metal.

In a preferred embodiment the sieve is arranged over the lowest part of the bottom of the roasting pan, more preferably over the recess comprising a drain outlet. Where the sieve is arranged over a recess, the recess may exhibit a rim or the like for detachably mounting the sieve, e.g. the recess, more particularly the edge of the recess may have a circumferential fold structure for putting the sieve in or on.

In an advantageous embodiment of the inventive roasting pan, the roasting pan comprises at least one leg.

Thus, that the roasting pan can be placed on a flat surface to avoid it tipping over.

In a preferred embodiment the roasting pan is equipped with at least one leg. The person skilled in the art will immediately know that the leg can be configured in a number of ways to convey a save footing.

The leg can be permanently linked to the roasting pan or can be detachably attached to the roasting pan, e.g. as rubber feet.

In an advantageous embodiment of the inventive roasting pan, the roasting pan and/or a part thereof is made of at least two different grades of steel.

As the inventive roasting pan is for use in an oven in particular, the roasting pan and/or parts thereof are preferably made of heat resistant material.

Preferably, the roasting pan and its associated parts are made of different grades of steel that are subsequently treated. However, the cord, preferably, is made of heat resistant rubber material or similar.

In an advantageous embodiment of the inventive roasting pan, the special draining device, the operating mechanism, the sieve, the sealing element, the spring element, the handle, the at least one leg and/or the mesh are detachably linked to the roasting pan, preferably for facilitating cleaning.

The roasting pan and the assembling and disassembling of the roasting pan and/or parts thereof is made in such a way that the roasting pan and/or parts thereof are easy to clean, which means if it is easy to clean it is also very hygienic - the sieve, the operating mechanism, such as a cord, and handle, as well as the mesh or other parts, can all be washed separately since they are removable.

In an advantageous embodiment of the inventive roasting pan, the roasting pan and/or parts thereof are enamelled.

It will be understood that Enamel and enamelled parts exhibit advantageous properties. The enamelled surface is smooth, hard, chemical resistant, durable, scratch resistant, has long-lasting colour fastness, is easy to clean, and cannot burn. In a particular advantageous embodiment of the inventive roasting pan, the roasting pan, and further parts thereof such as the legs or the special draining device or parts thereof, such as the recess, the operating mechanism or parts thereof, are enamelled.

All described embodiments of the invention have the advantage that cooking liquids which collect in the roasting pan during a roasting cycle, such as fat, grease and/or gravy collect more easily. The present invention further provides a roasting pan from which cooking liquids can be drained/and or poured more easily. Moreover, the use of an operating mechanism allows the closing and opening of an outlet or opening for draining the cooking liquids. The operating mechanism can be linked to the roasting pan, preferably permanently linked during the roasting cycle, wherein more preferably said operating mechanism is detachably linked to the roasting pan and can be detached for facilitated cleaning thereof. Additionally, the present invention provides a roasting pan, wherein fast and complete draining of the cooking liquids is facilitated. Moreover, the inventive roasting pan can advantageously be equipped with a sieve, e.g. a mesh or a strainer or the like. Thus, the present invention provides a roasting pan comprising an outlet or opening, such as a drain outlet which will not readily clog if cooking liquids are drained out.

The present invention will be described in further detail with reference to the drawings, in which
- FIG 1: illustrates a perspective view of a roasting pan showing a first inventive embodiment;
- FIG 2: illustrates a perspective view of a roasting pan showing a second inventive embodiment;
- FIG 3: illustrates a sectional perspective view of a roasting pan showing a second inventive embodiment;
- FIG 4: illustrates a perspective view of a roasting pan showing a third inventive embodiment;

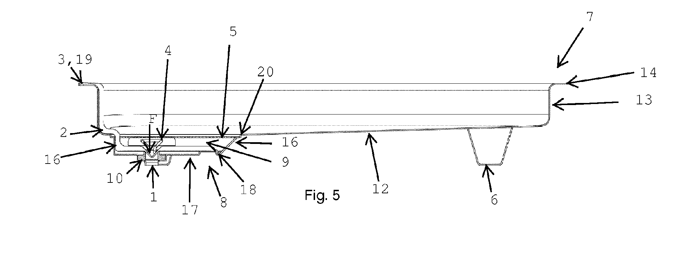

- FIG 5: illustrates a side sectional view of a roasting pan showing a third inventive embodiment.

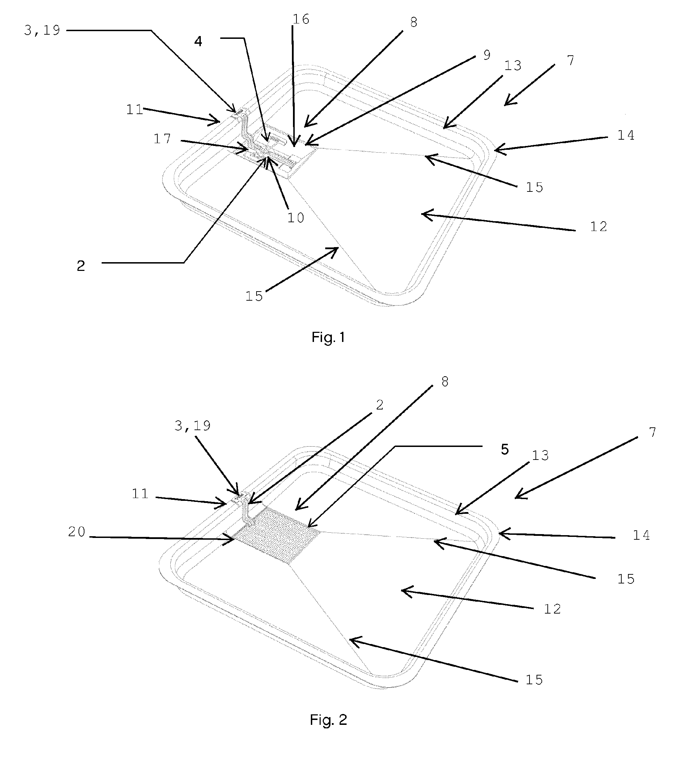

FIG 1 shows a perspective view of a roasting pan 7 showing a first inventive embodiment. The roasting pan 7 is funnel-shaped and comprises a special draining device 8. The bottom 12 of the roasting pan 7 comprises a recess 9. The side walls 16 of the recess 9 and the bottom 12 of the roasting pan 7 comprise an inclination which allows the cooking liquids to run down and collect in the recess 9. This design allows that cooking liquids assemble and/or gather at the lowest part of the bottom 12 of the roasting pan 7, here the recess 9. Nevertheless, the overall design of the roasting pan 7 is flat. The side walls 13 of the roasting pan 7 exhibit a strong incline, are almost vertical. Said side walls are relatively high, thus the roasting pan 7 represents a deep roasting pan. Here the bottom of the roasting pan according to the present invention comprises a groove or fold 15 as a means for facilitating the assembling of the cooking liquids. The roasting pan 7 comprises a heat resistant cord 2 as the operating mechanism 2, which is detachably linked to the roasting pan 7, facilitating cleaning thereof.

The special draining device 8 is shown here in the neutral, i.e. closed position, where the inventive roasting pan prevents the cooking liquids from flowing out of the roasting pan 7. The rectangular and funnel-shaped recess 9 comprises a drain outlet 1 at the bottom of the recess 9. Thus, the cooking liquids gather and assemble in the recess 9 and will collect above said drain outlet 1 and thus draining is facilitated when the special draining device 8 is in its open position. Here the roasting pan 7 comprises a sealing ring 10 as a sealing element 10 which tightly seals the drain outlet 1 in the neutral position in that a spring element 4 comprising bend an prestressed wires is arranged such that it supports the maintaining of the neutral position. For this purpose, the spring element 4 is configured such that it exhibits a spring force F which holds the operating mechanism in place. More precisely, the spring element 4 presses the heat resistant cord 2 down towards the bottom 12 of the roasting pan 7, here towards the bottom 17 of the recess 9 and thus towards the drain outlet 1 which is thus sealed by the sealing ring 10. The force F exhibited by the spring element 4 presses the cord 2 down on the drain outlet 1, and thus closes the drain outlet 1, and, thereby, holds the special draining device 8 in the neutral, i.e. closed.

To adjust an open position the special draining device 8 is operated without the need of further additional parts, such as a screw driver, or the like. When the handle 3 is pressed down, the part of it attached to the cord 2 enables the outlet 1 to be closed. Therefore, it closes off the drainage of scalding grease and boiling liquid. In its neutral position, the handle 3 is pressed down by the spring 4 that is held in place on the roasting pan 7. When the handle 3 is lifted, the scalding grease and boiling liquid runs out of the roasting pan 7. The handle 3 is supported in its neutral position by the edge of the pan 11.

The open position, where the cooking liquids are enabled to drain out of the roasting pan is facilitated can be adjusted by pulling the handle 3 upwards. The handle 3 here is formed being part of the cord 2. More precisely, the first end 18 of the cord 2 is loosely linked to the roasting pan such that pulling the second end 19 of the cord 2 which is here the handle 3, allows lifting the second end 19, 3 of the cord 2 also mediates lifting of the elongated middle part of the cord 2. Said lifting of the cord 2 away from the bottom of the roasting pan 2 conveys opening of the drain outlet 1.

Thereby, the handle 3 is arranged at an upper edge region 11 of the roasting pan 7 such that the handle 3 does not protrude over the dimensions of the roasting pan 7, at least in its neutral position. The use and handling of the roasting pan 7, e.g. inserting or sliding in the roasting pan 7 into a guiding rail of an oven, is not affected.

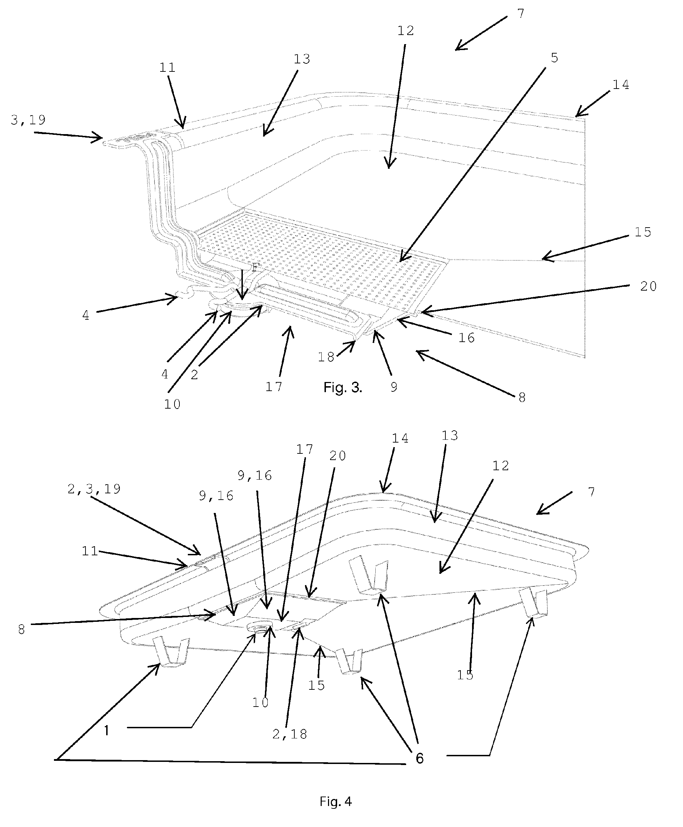

FIG 2 and FIG. 3 show a roasting pan 7 like in FIG 1. However, the roasting pan 7 comprises a detachably mounted sieve 5 which is placed above the drain outlet 1. Said sieve 5 here comprises a perforated steel plate as a mesh for sieving unwanted solid materials contained in the cooking liquids. The sieve 5 is arranged over the recess 9 comprising the drain outlet 1. The recess 9 exhibits a circumferential fold 20 where the sieve is laid in, i.e. detachably mounted.

FIGS.4 and show a roasting pan 7 like in FIGS 1 to 3. However, the roasting pan in Fig 4. comprises four legs 6 which convey a save footing of the roasting pan 7, especially if placed on a flat surface thereby avoid it tipping over. Here the legs 6 are permanently linked to the bottom 12 of the roasting pan 7.

In each of the above shown embodiments of the inventive roasting pan 7, the sieve 5, and the special draining device 8, comprising the heat resistant cord 2 with its handle 3, the sealing ring 10 and the spring wires 4, are detachably linked to the roasting pan 7 can be disassembled and thus be easily washed and cleaned.

It is normally difficult to drain a standard roasting pan containing scalding grease and boiling liquid, but the invention of the roasting pan with draining device and strainer has made this process much easier.

The scalding grease and boiling liquid runs down to the drain outlet 1 due to the design of the roasting pan 7. The drain outlet 1 can be opened and closed by using the handle 3. The spring 4 keeps constant pressure on the handle 3, which in turn presses down on the cord 2 so that the drain outlet 1 and cord 2 are closed. The strainer 5 avoids unwanted material passing through.

The roasting pan 7 with draining device 8 and strainer 5 can be used in ordinary household ovens, industrial ovens, baking ovens and barbecues of various kinds.

### List of reference numerals

- 1: drain outlet
- 2: operating mechanism, heat resistant cord
- 3: handle
- 4: spring element
- 5: sieve, strainer
- 6: leg(s)
- 7: roasting pan
- 8: special draining device
- 9: recess
- 10: sealing element
- 11: upper edge region of the roasting pan
- 12: bottom of roasting pan
- 13: side wall of roasting pan
- 14: rim of roasting pan
- 15: fold, groove
- 16: side wall of recess
- 17: bottom of recess
- 18: First end of operating mechanism
- 19: second end of operating mechanism
- 20: fold of recess

- F: spring force

## Claims

1. Roasting pan (7), wherein the roasting pan (7) has a shape of a funnel.

2. Roasting pan (7), preferably according to claim 1, wherein the roasting pan (7) is for use in ovens, and wherein the roasting pan (7) is **characterised by** a design that collects scalding grease and boiling liquid so that they can then be drained off.

3. The roasting pan (7) according to any one of claims 1 and 2, wherein the roasting pan (7) is **characterised by** a special draining device (8) comprising an operating mechanism (2), wherein the operating mechanism (2), preferably is an oblong shaped operating mechanism (2), more preferably an oblong shaped lever mechanism (2), and most preferably a cord (2).

4. The roasting pan (7) according to any one of claims 1 to 3, wherein the roasting pan (7) is **characterised by** a drain outlet (1).

5. The roasting pan (7) according to any one of claims 1 to 4, wherein the roasting pan (7) comprises a recess (9), wherein the recess (9) preferably is for collecting cooking liquids.

6. The roasting pan (7) according to any one of claims 1 to 5, wherein the roasting pan (7) comprises a sealing element (10), preferably for sealing the drain outlet (1).

7. The roasting pan (7) according to any one of claims 1 to 6, wherein the roasting pan (7) comprises a spring element (4).

8. The roasting pan (7) according to any one of claims 1 to 7, wherein the roasting pan (7) is **characterised by** an attached handle (3), wherein the handle (3) preferably is to enable easy draining.

9. The roasting pan (7) according to any one of claims 3 to 8, wherein the special draining device (8) is attached to the roasting pan (7), preferably permanently linked to the roasting pan (7) during a roasting cycle, and wherein, more preferably, said special draining device (8) is detachably linked for facilitating cleaning.

10. The roasting pan (7) according to any one of claims 1 to 9, wherein the handle (3) is arranged at an upper edge region (11) of the roasting pan (7).

11. The roasting pan (7) according to any one of claims 1 to 10, wherein the roasting pan (7) comprises a sieve (5), wherein the sieve (5) preferably is placed above the drain outlet (1) .

12. The roasting pan (7) according to any one of claims 1 to 11, wherein the roasting pan (7) comprises at least one leg (6).

13. The roasting pan (7) according to any one of claims 1 to 12, wherein the roasting pan (7) and/or a part thereof is made of at least two different grades of steel.

14. The roasting pan (7) according to any one of claims 1 to 13, wherein the special draining device (8), the operating mechanism (2), the sieve (5), the sealing element (10), the spring element (4), the handle (3), the at least one leg (6) and/or the mesh are detachably linked to the roasting pan (7), preferably for facilitating cleaning.

15. The roasting pan (7) according to any one of claims 1 to 14, wherein the roasting pan (7) and/or parts thereof are enamelled.
